# DEMANDE DE BREVET EUROPEEN

(11) **EP 1 983 176 A1**
(43) Date de publication de la demande: **22.10.2008**
(21) Numéro de dépôt: 08154143.5
(22) Date de dépôt: 07.04.2008
(51) Int. Cl.: F02D 13/02, F02M 25/07, F02D 9/04

(54) **Procédé et système de démarrage et de ralenti à froid d'un moteur à combustion interne**

(30) Priorité: 17.04.2007 FR 0754526
(71) Demandeur: Peugeot Citroën Automobiles SA, 78943 Vélizy-Villacoublay Cedex (FR)
(72) Inventeur: Sulkowski, Pascal, 95100, Argenteuil (FR); Nicolas, Jérôme, 75005, Paris (FR)
(74) Mandataire: Ménès, Catherine

(57) **Abrégé**

Procédé de démarrage et de ralenti à froid d'un moteur (10) à combustion interne comprenant un circuit (20) d'admission, une chambre (11) de combustion et un circuit (30) d'échappement.

Selon l'invention, ledit procédé consiste à maintenir une quantité de gaz d'échappement dans la chambre (11) de combustion lors de la phase de combustion du moteur (10), par mise en circulation forcée desdits gaz dans le circuit (20) d'admission lors de la phase d'échappement, et ré-admission dans la chambre (11) de combustion lors de la phase d'admission.

Application aux moteurs diesel à injection directe,

## Description

La présente invention concerne un procédé et un système de démarrage et de ralenti à froid d'un moteur à combustion interne.

L'invention trouve une application particulièrement avantageuse dans le domaine des moteurs à combustion interne du type diesel à injection directe.

Actuellement, les véhicules équipés de moteurs diesel à injection directe présentent des performances limitées en cas de démarrage à froid : démarrages aléatoires par grand froid, mauvaise tenue du ralenti entraînant des instabilités et des ratés, voire même le calage du moteur, ainsi que la production de fumées, de bruits, etc.

Les moyens connus aujourd'hui pour améliorer ces performances sont peu nombreux et induisent la plupart du temps une augmentation significative du coût du moteur. Parmi ces moyens, on peut citer l'ajout de cannes chauffantes pour faire monter la température du moteur avant démarrage, ainsi que le recours à la technologie des bougies de préchauffage en rupture.

Aussi, un but de la présente invention est de proposer une autre solution à ce problème de performances à froid des moteurs à combustion interne qui serait de coût plus faible et pourrait apporter un complément de robustesse.

Ce but est atteint, conformément à l'invention, grâce à un procédé de démarrage et de ralenti à froid d'un moteur à combustion interne comprenant un circuit d'admission, une chambre de combustion et un circuit d'échappement, remarquable en ce que ledit procédé consiste à maintenir une quantité de gaz d'échappement dans la chambre de combustion lors de la phase de combustion du moteur, par mise en circulation forcée desdits gaz dans le circuit d'admission lors de la phase d'échappement, et ré-admission dans la chambre de combustion lors de la phase d'admission.

Du fait de la présence de gaz brûlés dans la chambre de combustion lors de la phase de combustion, l'invention met en jeu les mécanismes avantageux suivants :
■ augmentation de la température moyenne de la charge d'air et de carburant dans la chambre de combustion, d'où un double gain sur le délai d'auto-inflammation du carburant, d'une part, et sur la reproductibilité du délai d'auto-inflammation, d'autre part,
■ recirculation dans la chambre de combustion de radicaux chimiques précurseurs de l'auto-inflammation, facilitant le démarrage de la combustion,
■ augmentation du travail de pompage et donc de la PMI_{HP}, assurant une meilleure stabilité de combustion.

Il est rappelé que la PMI, acronyme de Pression Moyenne Indiquée, est le rapport entre le travail fourni au cours d'un cycle thermodynamique d'un moteur à combustion interne (autrement dit l'aire du cycle représentant l'évolution de la pression en fonction du volume, et la cylindrée du cylindre considéré, cette aire étant elle-même la somme de la boucle dite haute pression (PMI_{HP}) correspondant au travail moteur et de la boucle dite basse pression correspondant au travail résistant (PMI_{BP}).

Selon un premier mode de mise en oeuvre du procédé conforme à l'invention, ladite mise en circulation forcée est réalisée par pilotage de l'ouverture du circuit d'admission lors de la phase d'échappement.

A titre d'exemple de réalisation, ledit pilotage est effectué en contrôlant le déphasage entre des arbres à cames commandant respectivement l'ouverture/fermeture des soupapes d'admission et d'échappement.

Selon un deuxième mode de mise en oeuvre, ladite mise en circulation forcée est réalisée au moyen d'une contre-pression créée dans ledit circuit d'échappement.

En particulier, Il est prévu dans ce cas que ladite contre-pression est créée au moyen d'un actionneur disposé dans le circuit d'échappement.

L'invention concerne également un système de démarrage et de ralenti à froid d'un moteur à combustion interne comprenant un circuit d'admission, une chambre de combustion et un circuit d'échappement, remarquable en ce que ledit système comprend des moyens de mise en circulation forcée desdits gaz dans le circuit d'admission lors de la phase d'échappement,

Selon un premier mode de réalisation, lesdits moyens de mise en circulation forcée des gaz d'échappement comprennent des moyens de pilotage de l'ouverture du circuit d'admission lors de la phase d'échappement.

L'invention prévoit notamment que lesdits moyens de pilotage comprennent des moyens de contrôle du déphasage entre des arbres à cames commandant respectivement l'ouverture/fermeture des soupapes d'admission et d'échappement.

Selon un deuxième mode de réalisation, lesdits moyens de mise en circulation forcée des gaz d'échappement comprennent des moyens pour créer une contre-pression dans ledit circuit d'échappement.

Avantageusement, lesdits moyens pour créer ladite contre-pression comprennent un actionneur disposé dans le circuit d'échappement.

La description qui va suivre en regard des dessins annexés, donnés à titre d'exemples non limitatifs, fera bien comprendre en quoi consiste l'invention et comment elle peut être réalisée.

La figure 1 est une vue de côté schématique d'un moteur à combustion interne.

La figure 2 est un diagramme donnant la levée h des soupapes d'échappement (trait plein) et d'admission (traits pointillés) du moteur de la figure 1 en fonction de l'angle a de rotation du vilebrequin du moteur.

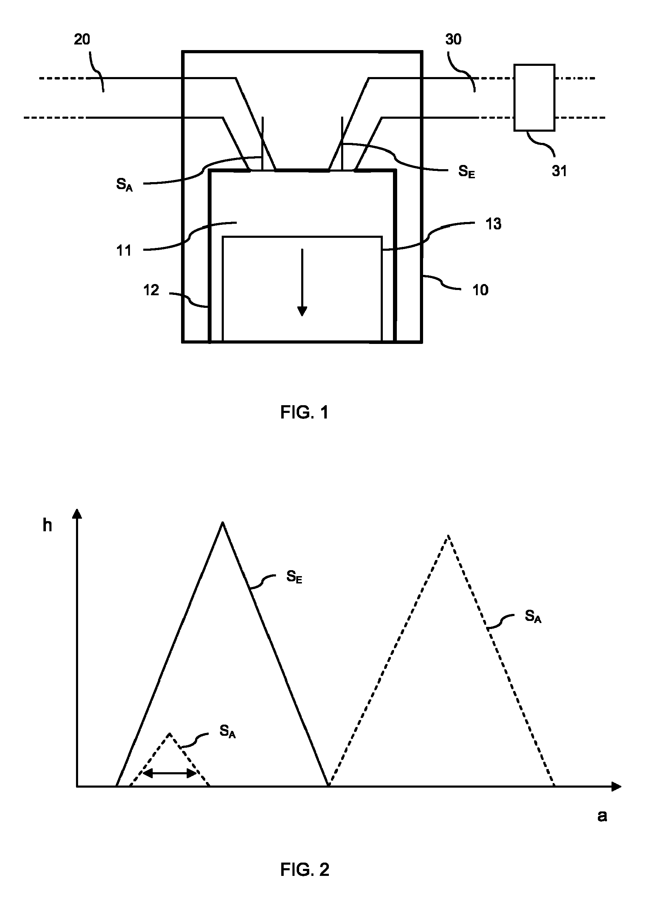

Sur la figure 1 est représenté un moteur 10 à combustion interne, moteur diesel à injection directe par exemple, comprenant un circuit 20 d'admission par lequel de l'air, éventuellement mélangé à des gaz d'échappement récupérés selon la technique EGR (« Exhaust Gas Recirculation »), est introduit dans la chambre 11 de combustion du moteur 10, comprise entre le cylindre 12 et le piston 13, durant la phase d'admission, la soupape SA d'admission étant en position ouverte.

Après la phase de combustion, telle qu'illustrée sur la figure 1, les gaz brûlés dans la chambre 11 de combustion sont évacués dans le circuit 30 d'échappement par le mouvement de retour du piston 13, la soupape SE d'échappement étant en position ouverte et la soupape SA d'admission normalement fermée.

De manière à améliorer les performances de démarrage et de ralenti par grand froid du moteur 10, un procédé est mis en oeuvre consistant à maintenir une quantité de gaz d'échappement chauds dans la chambre 11 de combustion lors de la phase de combustion. La combustion se trouve alors favorisée puisque la température initialement basse des gaz admis dans la chambre 11 de combustion peut être notablement augmentée du fait de la présence des gaz d'échappement chauds.

Pour cela, il est prévu une mise en circulation forcée des gaz d'échappement dans le circuit 20 d'admission lors de la phase d'échappement suivie d'une ré-admission de ces gaz dans la chambre 11 de combustion lors de la phase d'admission.

L'invention met donc en pratique le procédé de récupération interne des gaz d'échappement, connu sous l'acronyme de IGR (« Internal Gas Recirculation ») dont le principe, illustré sur la figure 2, est le suivant.

Les soupapes SA d'admission sont ouvertes très tôt (triangle en pointillés à gauche de la figure 2) pendant la phase d'échappement (triangle en trait plein à gauche de la figure 2). La pression dans le circuit 30 d'échappement étant nettement supérieure à celle dans le circuit 20 d'admission, des gaz brûlés lors de la combustion sont aspirés dans le circuit d'admission pendant toute la phase dite de croisement au cours de laquelle les soupapes SA d'admission et les soupapes SE d'échappement sont ouvertes simultanément. Lors de la phase d'admission (triangle pointillés à droite de la figure 2) succédant à la phase d'échappement, ces gaz brûlés sont réintroduits dans la chambre 11 de combustion, augmentant ainsi la température du mélange gazeux admis dans la chambre.

De manière à faciliter le démarrage et le ralenti par très grand froid du moteur 10, il est prévu par l'invention de forcer la mise en circulation des gaz d'échappement dans le circuit 20 d'admission lors de la phase de croisement définie plus haut.

A cet effet, un premier mode de réalisation de l'invention consiste à piloter l'ouverture du circuit 20 d'admission lors de la phase d'échappement. Il s'agit, en d'autres termes, d'augmenter le croisement des soupapes en allongeant la durée d'ouverture des soupapes SA d'admission si l'on veut augmenter la température dans la chambre 11 de combustion pour un meilleur démarrage à froid.

Ce résultat peut être obtenu en contrôlant le déphasage entre des arbres à cames (non représentés) commandant respectivement l'ouverture et la fermeture des soupapes d'admission SA et d'échappement SE.

En l'espèce, le pilotage de la quantité de gaz mis en circulation forcée dans le circuit 20 d'admission est réalisé par contrôle de l'ouverture de la soupape SA d'admission.

Un deuxième mode de mise en oeuvre de l'invention consiste à créer une contre-pression dans le circuit 30 d'échappement. On peut ainsi obtenir qu'une masse plus importante de gaz brûlés soient présente dans la chambre 11 de combustion après la phase d'admission suivant la phase d'échappement au cours de laquelle ces gaz ont été aspirés dans le circuit 20 d'admission à la suite de l'ouverture de la soupape SA d'admission.

Cette contre-pression peut être réalisée au moyen d'un actionneur 31 disposé dans le circuit 30 d'échappement.

Ledit actionneur 31 est, avantageusement, un actionneur existant dans le moteur 10, tel qu'un turbocompresseur à géométrie variable, une vanne RTE, etc.

Cependant, l'actionneur 31 peut être également un équipement spécifique, comme un clapet actif sur l'échappement.

Dans le cas illustré à la figure 2, le temps de la phase d'admission est représenté strictement postérieur au temps de la phase d'échappement mais l'homme de l'art conviendra que l'invention peut également être mise en oeuvre (et en pratique le sera le plus souvent) dans l'hypothèse où ces deux temps se superposent partiellement, autrement dit si les soupapes d'admissions commencent à s'ouvrir alors que les soupapes d'échappement ne sont pas encore fermées.

## Revendications

1. Procédé de démarrage et de ralenti à froid d'un moteur (10) à combustion interne de type diesel, à injection directe, comprenant un circuit (20) d'admission, une chambre (11) de combustion et un circuit (30) d'échappement, **caractérisé en ce que** ledit procédé consiste à maintenir une quantité de gaz d'échappement dans la chambre (11) de combustion lors de la phase de combustion du moteur (10), par mise en circulation forcée desdits gaz dans le circuit (20) d'admission lors de la phase d'échappement, et ré-admission dans la chambre (11) de combustion lors de la phase d'admission.

2. Procédé selon la revendication 1, dans lequel ladite mise en circulation forcée est réalisée par pilotage de l'ouverture du circuit (20) d'admission lors de la phase d'échappement.

3. Procédé selon la revendication 2, dans lequel ledit pilotage est effectué en contrôlant le déphasage entre des arbres à cames commandant respectivement l'ouverture/fermeture des soupapes d'admission (SA) et d'échappement (SE).

4. Procédé selon la revendication 1, dans lequel ladite mise en circulation forcée est réalisée au moyen d'une contre-pression créée dans ledit circuit (30) d'échappement.

5. Procédé selon la revendication 4, dans lequel ladite contre-pression est créée au moyen d'un actionneur (31) disposé dans le circuit (30) d'échappement.

6. Système de démarrage et de ralenti à froid d'un moteur (10) à combustion interne de type diesel, à injection directe, comprenant un circuit (20) d'admission, une chambre (11) de combustion et un circuit (30) d'échappement, **caractérisé en ce que** ledit système comprend des moyens de mise en circulation forcée desdits gaz dans le circuit (20) d'admission lors de la phase d'échappement,

7. Système selon la revendication 6, dans lequel lesdits moyens de mise en circulation forcée des gaz d'échappement comprennent des moyens de pilotage de l'ouverture du circuit (20) d'admission lors de la phase d'échappement.

8. Système selon la revendication 7, dans lequel lesdits moyens de pilotage comprennent des moyens de contrôle du déphasage entre des arbres à cames commandant respectivement l'ouverture/fermeture des soupapes d'admission et d'échappement.

9. Système selon la revendication 6, dans lequel lesdits moyens de mise en circulation forcée des gaz d'échappement comprennent des moyens pour créer une contre-pression dans ledit circuit (30) d'échappement.

10. Système selon la revendication 9, dans lequel lesdits moyens pour créer ladite contre-pression comprennent un actionneur (31) disposé dans le circuit (30) d'échappement.
